# EUROPÄISCHE PATENTANMELDUNG

(11) **EP 1 684 056 A2**
(43) Veröffentlichungstag der Anmeldung: **26.07.2006**
(21) Anmeldenummer: 05026781.4
(22) Anmeldetag: 08.12.2005
(51) Int. Cl.: G01J 3/02

(54) **Anordnung und Verfahren zur Kompensation der Temperaturabhängigkeit von Detektoren in Spektrometern**

(30) Priorität: 21.01.2005 DE 102005003441
(71) Anmelder: CARL ZEISS JENA GmbH, 07745 Jena (DE)
(72) Erfinder: Kerstan, Felix, Dr., 07747 Jena (DE); Zeh, Ulrich, 07743 Jena (DE)

(57) **Zusammenfassung**

Die vorliegende Erfindung betrifft eine Anordnung und das dazugehörige Verfahren zur Kompensation der Temperaturabhängigkeit von Detektoren in Spektrometern.

Bei der erfindungsgemäßen Lösung besteht die Anordnung zur Kompensation der Temperaturabhängigkeit von Detektoren in Spektrometern aus einer Beleuchtungseinheit (1), einem Eintrittsspalt (2), einem abbildenden Gitter (3), einem Detektor (4) und einer Steuer- und Auswerteeinheit (5). Zusätzlich zu einem vorhandenen ersten Temperaturfühler (6) und einer Temperiereinheit (7) ist ein zweiter Temperaturfühler (8) für die Umgebungstemperatur vorhanden. Bei dem erfindungsgemäßen Verfahren wird die Temperiereinheit von der Steuer- und Auswerteeinheit, in Auswertung der von zwei Temperaturfühlern ermittelten Messwerte, so gesteuert, dass die Temperatur des Detektors konstant bleibt.

Mit der erfindungsgemäßen Anordnung kann der Quereinfluss der Umgebung auf den Detektor kompensiert werden, so dass die Stabilisierung der Detektortemperatur verbessert wird. Durch die zusätzliche Komponente "Umgebungstemperatur" wird eine verbesserte Stabilisierung der Detektortemperatur gewährleistet.

## Beschreibung

Die vorliegende Erfindung betrifft eine Anordnung und das dazugehörige Verfahren zur Kompensation der Temperaturabhängigkeit von Detektoren in Spektrometern erreicht wird. Durch die verbesserte Stabilisierung der Detektortemperatur kann eine erhöhte Messgenauigkeit in einem breiten Anwendungstemperaturbereich gewährleistet werden.

Spektrometer werden in der Prozessmesstechnik zur Bestimmung der Konzentration bzw. Schichtdicke chemischer Substanzen verwendet. Diese werden anhand eines bekannten oder vorher vermessenen charakteristischen Spektrums erkannt oder quantitativ bestimmt.

Die Empfindlichkeit der Detektoren ist stark temperaturabhängig; was eine breite Anwendung behindert. Insbesondere am langwelligen Ende des Detektionsbereiches nimmt die Temperaturabhängigkeit stark zu. Dies ist besonders kritisch, wenn das charakteristische Spektrum der zu bestimmenden Substanz genau an diesem langwelligen Ende des Detektionsbereiches liegt. Daher bemüht man sich die Temperatur der Detektoren möglichst konstant zu halten. Um exakte Messwerte zu ermitteln, muss die Stabilisierung teilweise auf Bruchteile eines Kelvin erfolgen. Dies ist nur mit einem hohen Aufwand realisierbar, da auch die Umgebungstemperatur mit deren mitunter beträchtlichen Schwankungen einen zusätzlichen Einfluss auf die Detektoren haben.

Die Gebrauchsmusteranmeldung DE 200 08 622 U1 beschreibt beispielsweise eine Sensorvorrichtung zur optischen Spektroskopie, mit der eine online-Prozesskontrolle möglich ist. Die Vermessung der Proben erfolgt dabei mittels einer Tauchsonde, deren optische Eigenschaften ebenfalls stark von der Temperatur der zu untersuchenden Substanz abhängig sind. Werden Proben mit unterschiedlichen Temperaturen vermessen, muss die Sonde zum Temperaturausgleich längere Zeit in der Probe verweilen um Messfehler zu vermeiden. Um den Zeitpunkt für den Temperaturausgleich bestimmen zu können, verfügt die Sensorvorrichtung über einen Temperaturfühler, der eine Messung erst bei erfolgtem Temperaturausgleich ermöglicht. Mit dieser Anordnung wird zwar gewährleistet, dass nur korrekte Messwerte ermittelt werden. Aufgrund der fehlenden Temperaturkompensation ist ein universeller Einsatz allerdings nicht möglich.

Des weiteren sind im Stand der Technik Lösungen bekannt, bei denen die Temperatur des Detektors konstant gehalten wird. Derartige Detektoren, die über einen Temperaturfühler verfügen, werden beispielsweise von HAMAMAT-SU (Datenblatt: "Image Sensoren - InGaAs linear image sensor G9211 to 9214 / 9205 to 9208 series", http://www.hamamatsu.com) angeboten.

Im Gegensatz dazu werden von anderen Herstellern, wie beispielsweise HY-TEC Microsystems, Temperiereinheiten mit entsprechender Steuereinheit angeboten (Datenblatt: "Subminiature Controller for Thermoelectric Coolers - HY5605", http://www.hytek.com).

Da der Temperaturfühler nicht auf dem Detektor, sondern immer in einem endlichen Abstand zu diesem angeordnet wird, kann auch nie die exakte Detektortemperatur bestimmt werden.

Derartige Lösungen haben jedoch den Nachteil, dass der Temperaturfühler für den Regelkreis nur in einem endlichen Abstand zum Detektor montiert sein kann. Daher ist nie ein absolut genaues Temperieren der empfindlichen Detektorfläche möglich. Massenanwendungen können nicht erschlossen werden, weil eine Temperaturstabilisierung des Detektors zu aufwendig ist. Andererseits kann ohne eine Temperaturstabilisierung der Detektorfläche die erforderliche Messgenauigkeit im Anwendungstemperaturbereich nicht gewährleistet werden.

Der vorliegenden Erfindung liegt die Aufgabe zugrunde eine Lösung zur Kompensation der Temperaturabhängigkeit von Detektoren für Spektrometer zu entwickeln, so dass eine Nutzung des gesamten Spektralbereiches, insbesondere bis zu dessen langwelliger Grenze trotz veränderlicher Umgebungs- oder Detektortemperatur ermöglicht wird.

Erfindungsgemäß wird die Aufgabe durch die Merkmale der unabhängigen Ansprüche gelöst. Bevorzugte Weiterbildungen und Ausgestaltungen sind Gegenstand der abhängigen Ansprüche.

Mit der vorgeschlagenen Anordnung und dem zugehörigen Verfahren zur Kompensation der Temperaturabhängigkeit von Detektoren in Spektrometern wird die erforderliche Messgenauigkeit für einen breiten Temperaturbereich gewährleistet und eine weite Anwendbarkeit ermöglicht.

Die Erfindung wird nachfolgend anhand von Ausführungsbeispielen beschrieben. Dazu zeigen:
- Figur 1:: den Prinzipaufbau eines Spektrometers mit der Anordnung zur Kompensation der Temperaturabhängigkeit von Detektoren in Spektrometern und
- Figur 2:: typische Spektren von Wasser und Eis, sowie das Störspektrum der Temperaturänderung.

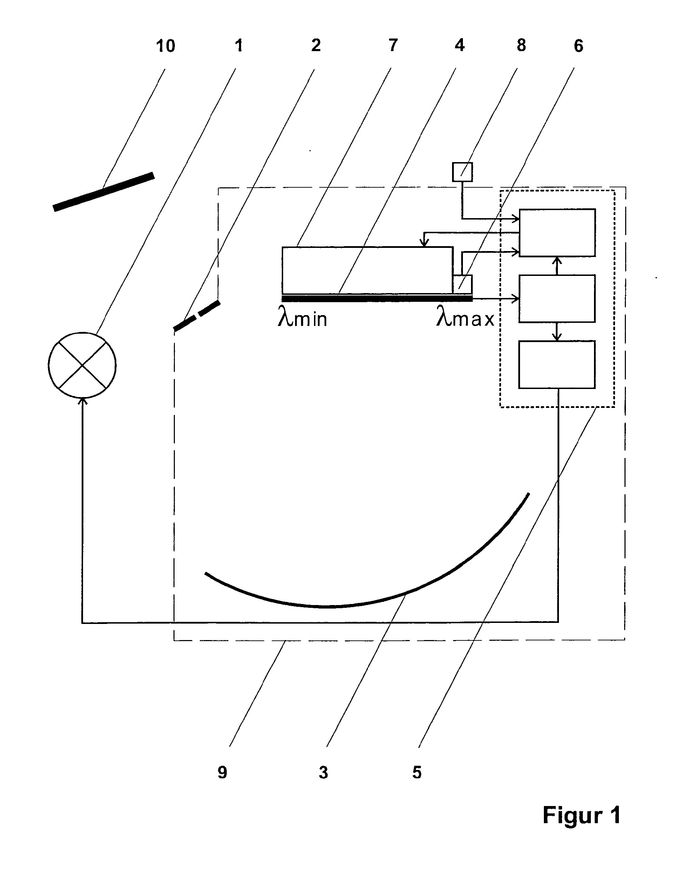

Die in **Figur 1** gezeigte erfindungsgemäße Anordnung zur Kompensation der Temperaturabhängigkeit von Detektoren in Spektrometern besteht aus einer Beleuchtungseinheit **1,** einem Eintrittsspalt **2,** einem abbildenden Gitter 3, einem Detektor 4 und einer Steuer- und Auswerteeinheit **5.** Zusätzlich verfügt die Anordnung zu einem vorhandenen ersten Temperaturfühler **6** und einer Temperiereinheit **7,** einen zweiter Temperaturfühler **8** für die Umgebungstemperatur. Dabei sind die Beleuchtungseinheit **1,** der Detektor **4,** die Temperiereinheit **7** und die beiden Temperaturfühler **6** und **8** mit der Steuer- und Auswerteeinheit **5** verbunden. Zumindest der Detektor **4,** der erste Temperaturfühler **6,** die Temperiereinheit 7 und das abbildende Gitter **3** befinden sind innerhalb eines gemeinsamen Gehäuses, wobei der Eintrittsspalt **2** in das Gehäuse integriert ist. Der erste Temperaturfühler **6,** zur Bestimmung der Detektortemperatur sollte vorzugsweise so dicht wie möglich am Detektor **4** und zwar in der Nähe des langwelligen Endes des Spektrums angeordnet werden. Der für die Messung der Umgebungstemperatur vorhandene zweite Temperaturfühler **8** ist vorzugsweise an der Außenseite des Gehäuses angeordnet.

Bei dem erfindungsgemäßen Verfahren zur Kompensation der Temperaturabhängigkeit von Detektoren in Spektrometern, insbesondere beim Betreiben der beschriebenen Anordnung wird die Temperiereinheit von der Steuer- und Auswerteeinheit, in Auswertung des von dem ersten Temperaturfühler ermittelten Messwertes der Detektortemperatur, so gesteuert, dass die Temperatur des Detektors konstant bleibt. Von der Steuer- und Auswerteeinheit wird dazu zusätzlich der Messwert der Umgebungstemperatur von dem zweiten Temperaturfühler berücksichtigt, um der Temperiereinheit ein entsprechendes Signal zu zuführen.

In einer zweiten Ausgestaltung wird von der Steuer- und Auswerteeinheit zusätzlich das Ausgangssignal des Detektors berücksichtigt, um der Temperiereinheit ein entsprechendes Signal zu zuführen.

In einer dritten Ausgestaltung wird von der Steuer- und Auswerteeinheit zusätzlich der Messwert der Umgebungstemperatur von dem zweiten Temperaturfühler sowie das Ausgangssignal des Detektors berücksichtigt, um der Temperiereinheit ein entsprechendes Signal zu zuführen.

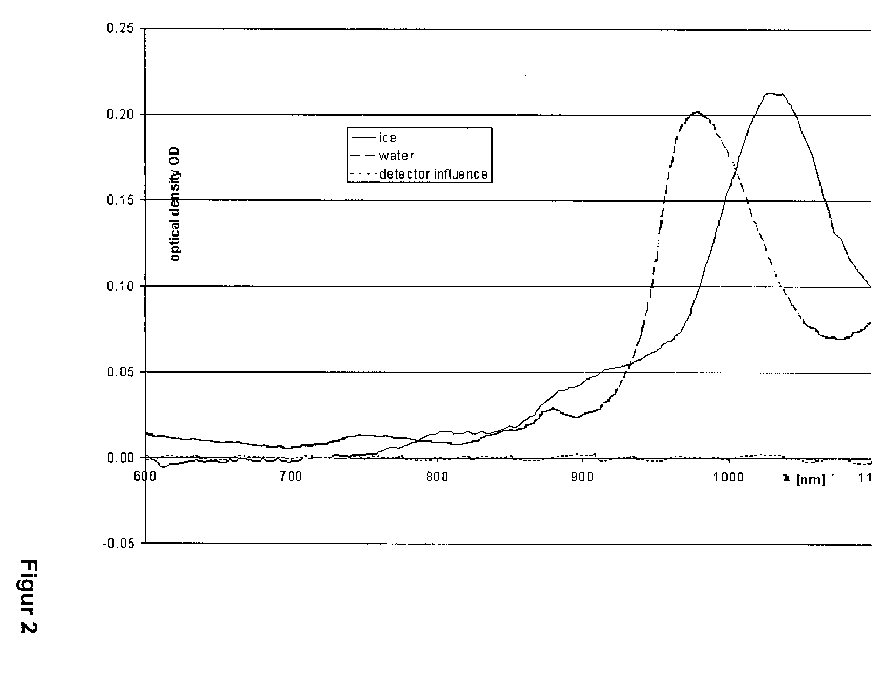

In **Figur 2** sind typische Spektren von Wasser und Eis sowie das Störspektrum der Temperaturänderung dargestellt. Da sich alle 3 Spektren signifikant voneinander unterscheiden, ist eine Trennung der Komponenten ohne großen Aufwand möglich. Im einfachsten Fall ist dies durch lineare Ausgleichsrechnung möglich.

Eine Veränderung des Spektrums infolge einer Temperaturänderung verhält sich wie eine zusätzliche chemische Komponente mit einem charakteristischen Spektrum. Dieses lässt sich sowohl aus den Detektordaten berechnen als auch in einer Klimakammer messen.

Der Vorteil der erfindungsgemäßen Anordnungen besteht darin, dass der Korrektureinfluss des zweiten Temperaturfühler (Umgebungstemperatur), jederzeit anhand des Spektrums einer unveränderlichen Probe (z. B. einer Standardprobe) überprüft bzw. korrigiert werden kann.

Mit der erfindungsgemäßen Anordnung und dem Temperaturfühler für die Umgebungstemperatur kann der Quereinfluss der Umgebung auf den Detektortemperatursensor kompensiert werden, so dass die Stabilisierung der Detektortemperatur verbessert wird. Die Stabilisierung der Detektortemperatur kann noch weiter verbessert werden, wenn die Steuer- und Auswerteeinheit zusätzlich noch das Detektorsignal berücksichtigt um ein entsprechendes Signal zur Steuerung der Temperiereinheit zu generieren.

Die vorgeschlagene Lösung, bei der die zusätzlichen Komponente "Umgebungstemperatur" eingeführt wird, um eine verbesserte Stabilisierung der Detektortemperatur zu gewährleisten, kann bei allen bekannten Verfahren der Spektralanalyse eingesetzt werden. Der dafür erforderliche zusätzliche Temperaturfühler wird an der Gehäuseaußenseite einer vorhandenen Spektrometeranordnung befestigt und mit der Steuer- und Auswerteeinheit, die einer entsprechenden Anpassung bedarf, verbunden.

## Patentansprüche

1. Anordnung zur Kompensation der Temperaturabhängigkeit von Detektoren in Spektrometern, bestehend aus einer Beleuchtungseinheit (1), einem Eintrittsspalt (2), einem abbildenden Gitter (3), einem Detektor (4) und einer Steuer- und Auswerteeinheit (5), bei der zusätzlich zu einem vorhandenen ersten Temperaturfühler (6) und einer Temperiereinheit (7), ein zweiter Temperaturfühler (8) für die Umgebungstemperatur vorhanden ist und bei der die Beleuchtungseinheit (1), der Detektor (3), die Temperiereinheit (7) und die beiden Temperaturfühler (6, 8) mit der Steuer- und Auswerteeinheit (5) verbunden sind.

2. Anordnung nach Anspruch 1, bei der sich zumindest der Detektor (4), der erste Temperaturfühler (6), die Temperiereinheit (7) und das abbildende Gitter (3) innerhalb eines gemeinsamen Gehäuse befinden, wobei der Eintrittsspalt (2) in das Gehäuse integriert ist.

3. Anordnung nach mindestens einem der Ansprüche 1 und 2, bei der der, für die Messung der Umgebungstemperatur vorhandene zweite Temperaturfühler (8) an der Außenseite des Gehäuses angeordnet ist.

4. Verfahren zur Kompensation der Temperaturabhängigkeit von Detektoren in Spektrometern, insbesondere beim Betreiben einer Anordnung nach mindestens einem der Ansprüche 1 bis 3, bei dem eine Temperiereinheit (7) von einer Steuer- und Auswerteeinheit (5), in Auswertung des von einem ersten Temperaturfühler (6) ermittelten Messwertes der Detektortemperatur, so gesteuert wird, dass die Temperatur eines Detektors (4) konstant bleibt, wobei von der Steuer- und Auswerteeinheit (5) zusätzlich der Messwert der Umgebungstemperatur von einem zweiten Temperaturfühler (8) berücksichtigt wird, um der Temperiereinheit (7) ein entsprechendes Signal zuzuführen.

5. Verfahren zur Kompensation der Temperaturabhängigkeit von Detektoren in Spektrometern, insbesondere beim Betreiben einer Anordnung nach mindestens einem der Ansprüche 1 bis 3, bei dem eine Temperiereinheit (7) von einer Steuer- und Auswerteeinheit (5), in Auswertung der von einem ersten Temperaturfühler (6) ermittelten Messwertes der Detektortemperatur, so gesteuert wird, dass die Temperatur des Detektors (4) konstant bleibt, wobei von der Steuer- und Auswerteeinheit (5) zusätzlich das Ausgangssignal des Detektors (4) berücksichtigt wird, um der Temperiereinheit (7) ein entsprechendes Signal zuzuführen.

6. Verfahren zur Kompensation der Temperaturabhängigkeit von Detektoren in Spektrometern, insbesondere beim Betreiben einer Anordnung nach mindestens einem der Ansprüche 1 bis 3, bei dem eine Temperiereinheit (7) von einer Steuer- und Auswerteeinheit (5), in Auswertung der von einem ersten Temperaturfühler (6) ermittelten Messwertes der Detektortemperatur, so gesteuert wird, dass die Temperatur des Detektors (4) konstant bleibt, wobei von der Steuer- und Auswerteeinheit (5) zusätzlich der Messwert der Umgebungstemperatur von einem zweiten Temperaturfühler (8) sowie das Ausgangssignal des Detektors (4) berücksichtigt wird, um der Temperiereinheit (7) ein entsprechendes Signal zuzuführen.
